# EUROPEAN PATENT APPLICATION

(11) **EP 1 571 608 A2**
(43) Date of publication of application: **07.09.2005**
(21) Application number: 05101631.9
(22) Date of filing: 03.03.2005
(51) Int. Cl.: G07F 7/10, G07G 1/12

(54) **Customer loyalty card and devices associated therewith**

(30) Priority: 05.03.2004 FI 20045063; 06.10.2004 FI 20045376
(71) Applicant: Osuma Finland Oy, 11130 Riihimäki (FI)
(72) Inventor: Lehtonen, Teijo, 20740, TURKU (FI); Jäntti, Jussi, 05840, HYVINKÄÄ (FI); Nymark, Markus, 79140, KOTALAHTI (FI)
(74) Representative: Virkkala, Jukka Antero

(57) **Abstract**

A customer loyalty card implemented as a smart card (180), including a microchip (200) provided with a processor (304) and a memory (306) as well as a data transfer connection (302) for two-way data transfer with a point-of-sale terminal device. The memory (306) contains a set of card-specific basic information (320), at least one bonus purse (340), an applet (310) provided with a set of functions as well as a programming interface (312) for calling said functions. The functions include reading and writing the bonus purse (340) in response to an input received via the data transfer connection (302). The invention further relates to a point-of-sale terminal system for processing a customer loyalty card, and to a central system for controlling point-of-sale terminal systems.

## Description

### BACKGROUND OF THE INVENTION

The invention relates to a customer loyalty card and devices associated therewith, such as a point-of-sale terminal system for processing a customer loyalty card and a central system for controlling point-of-sale terminal systems.

Companies operating in retail business try to enhance customer loyalty by offering various customer loyalty cards. For instance, a company may reward its customers with bonuses which depend on the amounts of purchases and which may be used as means of payment in connection with a later purchase transaction. In addition to the enhanced customer loyalty, the company obtains information on customers' purchasing behaviour.

A problem with such an arrangement is that the customers find the system slow: bonuses accumulated on the basis of a purchase can often be used only weeks after the purchase transaction. Another problem is the amount of work required by managing the customer loyalty cards. For example, the process of mailing physical benefit vouchers to customers and, on the other hand, receiving and processing the benefit vouchers used by the customers in retail shops and in central companies presents a huge logistic task.

### BRIEF DESCRIPTION OF THE INVENTION

An object of the invention is to provide a customer loyalty card and devices supporting the same as well as methods of using and operating these so as to enable the above-mentioned problems to be solved. The object of the invention is achieved by a method and an arrangement which are characterized by what is disclosed in the independent claims. Preferred embodiments of the invention are disclosed in the dependent claims.

An aspect of the invention is thus a customer loyalty card which has been implemented as a smart card including a microchip provided with a processor and a memory as well as a data transfer connection for two-way data transfer with a point-of-sale terminal. The memory includes a set of card-specific basic information, multiple bonus purses, each of which is associated with a specific year or some other period of time. The memory also includes an application program provided with a set of functions as well as a programming interface for calling said functions. The functions include reading and writing the multiple bonus purses in response to an input received via the data transfer connection.

Another aspect of the invention is a point-of-sale terminal system which includes a payment terminal device. It includes, or is connected with, first data transfer means for reading and writing a smart card in accordance with the invention, second data transfer means for a line connection to a central system as well as an application program provided with functions for receiving and updating bonus information on the smart card.

Still another aspect of the invention is a central system for controlling a plurality of payment terminals through a telecommunication connection wherein the payment terminals are provided with means for reading and writing a customer loyalty card implemented as a smart card. The central system includes a customer database which contains information on a plurality of customer loyalty cards, each of which being provided with customer and bonus information; a company database which includes information on payment terminals and companies in possession of such terminals; and an alert list database which includes information on suspicious customer loyalty cards and/or payment terminals. In addition, the central system includes an operational logic provided with a routine for receiving purchase reports to be received periodically from each company in possession of a payment terminal such that a combination of purchase reports of each possessor company contains information on bonuses granted by the payment terminals of a possessor company during a period; and a routine for distributing contents of an alert list database to the companies in possession of payment terminals.

On one hand, an idea underlying the invention is that customer-specific bonus and/or other benefits that can be used as payment in connection with a purchase transaction is/are maintained in real-time on a customer loyalty card provided with a microchip. In some embodiments of the invention, in addition to such a bonus to be maintained on a customer loyalty card, i.e. a "card bonus", a bonus, i.e. a "database bonus", is maintained in an online database such that this bonus can be used e.g. for paying for purchases made through electronic commerce. Some preferred embodiments of the invention relate to solving special problems with such a database bonus and/or to an efficient joint use of a card bonus and a database bonus.

The fact that a microchip maintained in real-time replaces physical benefit vouchers delivered by mail provides certain advantages, one such advantage being that the need to process physical benefit vouchers during different stages of the process is omitted.

This seemingly uncomplicated goal of real-timeness does, however, involve some problems. An extensive problem area generally relates to information security. Since bonuses may be used in connection with a purchase transaction, they are comparable with money. Since printing and processing physical (paper) benefit vouchers is omitted, the bonuses on a customer loyalty card are maintained in a distributed and localized manner in shops, the number of which may be considerably high. A copied or stolen payment terminal which can be used for generating bonuses onto a customer loyalty card becomes, in a manner of speaking, a device for forging money. Some preferred embodiments of the invention relate to solving such information security problems.

### BRIEF DESCRIPTION OF THE DRAWINGS

The invention is now described in closer detail in connection with the preferred embodiments and with reference to the accompanying drawings, in which
Figure 1 is a general view of the main parts of an overall system;
Figures 2A and 2B show a mechanical implementation of a customer loyalty card;
Figure 3 is a block diagram of a chip for a customer loyalty card;
Figure 4 shows information structures provided on the chip in more detail than Figure 3;
Figures 5A and 5B, which combine to constitute one logical figure, show a flow diagram of a selling transaction;
Figure 6 shows the overall system in accordance with Figure 1 with means for processing database bonuses added thereto; and
Figure 7 shows information structures for processing database bonuses in more detail.

### DETAILED DESCRIPTION OF THE INVENTION

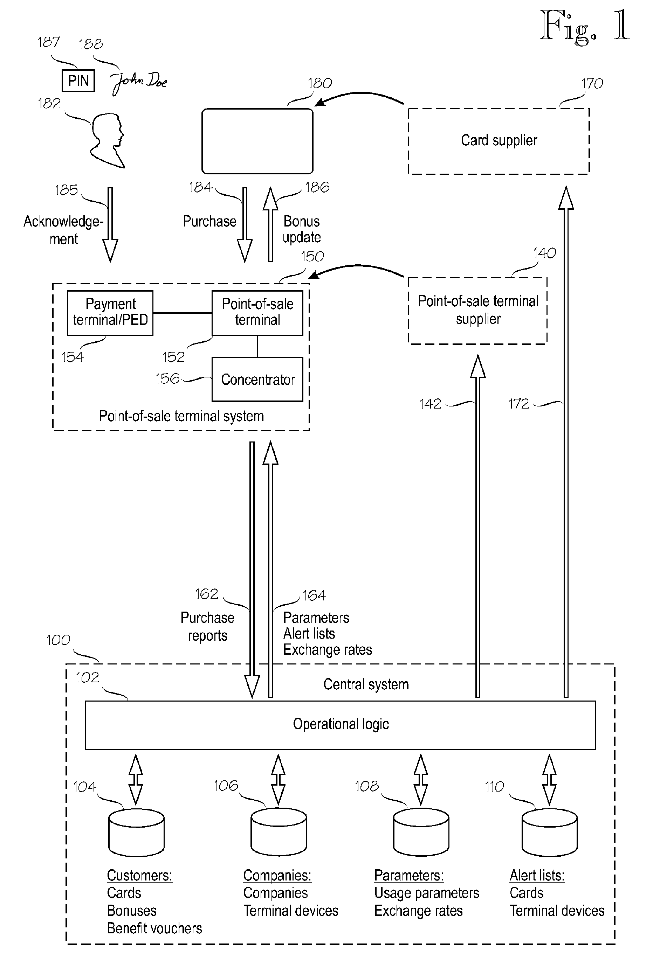

Figure 1 is a general view of the main parts of an overall system. The overall system is managed by a central system designated by reference number 100. Since bonuses and/or benefit vouchers on a customer loyalty card are almost comparable with money, the system cannot be open in the sense that it would be possible for anyone to supply customer loyalty cards or point-of-sale terminals reading and writing the same, but each point-of-sale terminal supplier 140 and each card supplier 170 has to be authorized by an operator of the central system 100. The central system 100 provides the point-of-sale terminal supplier 140 with information 142 on the basis of which the point-of-sale terminal supplier 140 supplies new point-of-sale terminals 152 to points of sale 150 joining the system. Similarly, the central system 100 provides the card supplier 170 with information 172 on the basis of which the card supplier 170 supplies new customer loyalty cards 180 to customers 182.

The central system 100 can be implemented by conventional server technology, and it is capable of communicating with the other parts 140, 150 and 170 of the system e.g. via the Internet, as long as information security is guaranteed by employing cryptographic methods.

The central system 100 includes an operational logic 102 and a set of different databases, a customer database 104, a company database 106, a parameter database 108 and an alert list database 110 being among the most important ones. The last-mentioned database contains information on customer loyalty cards and terminal devices under suspicion.

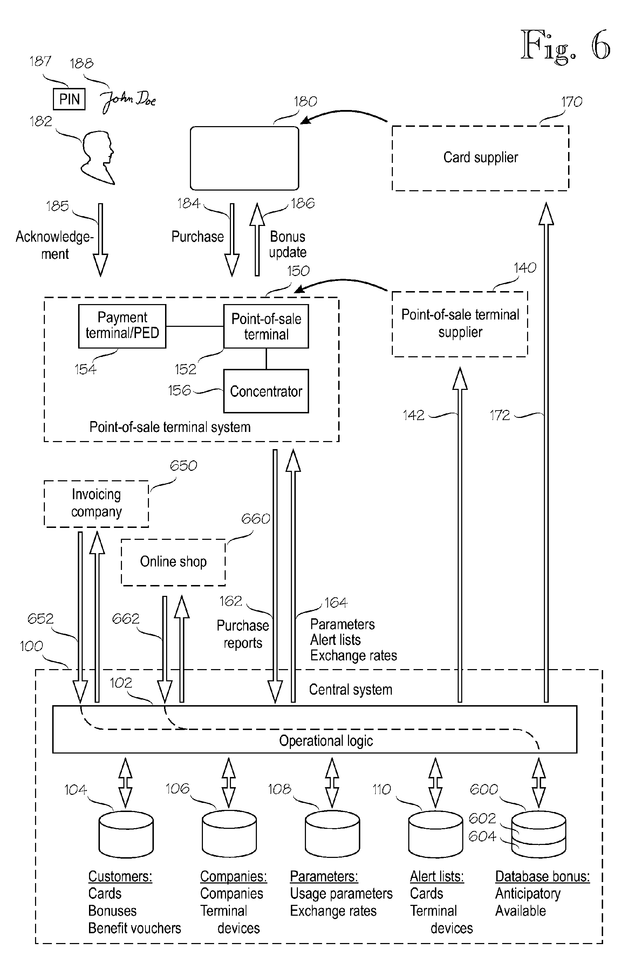

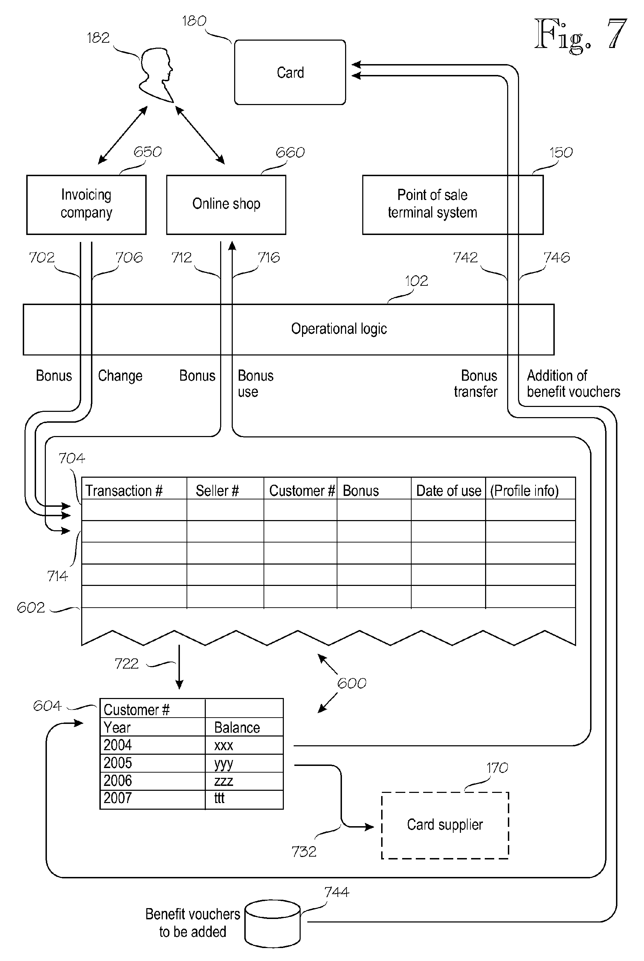

The customer database 104 contains customer identification and address information and, possibly, information used for allocated marketing. The customer database 104 further contains information on bonuses and/or benefit vouchers on cards. It should be noted, however, that information on bonuses and/or benefit vouchers is maintained in real-time on the customer loyalty cards 180 themselves; the information in the customer database 104 of the central system can be considered to correspond with a backup copy in an information system, which is maintained periodically, e.g. once a day or once per workday. In addition to the customer database 104 serving as a backup copy should a card go missing, the customer, via a network browser, can obtain more detailed information than what is available from the card itself. The system's concept of card bonuses which resides in the custom database 104, is, however, different in kind from a database bonus used in some embodiments of the invention and to be described in connection with Figures 6 and 7.

Similarly, the company database 106 contains address and identification information on companies that have joined the system, terminal devices used by these companies and bonuses and benefit vouchers granted by the companies.

The parameter database 108 contains parameters related to the companies and devices, such as information concerning calculation of maintenance fees and seller's returns, which are mainly routine procedures; therefore, they will not be described in detail herein. As far as the present invention is concerned, the most interesting part of the parameter database 108 is exchange rates, which are delivered to the point-of-sale terminals 152 in connection with periodical reports 164. Exchange rates and the basic currency of a customer on each customer loyalty card (e.g. Euro cent) enable the system to be expanded beyond exchange rate boundaries.

The alert list database 110 contains information on customer loyalty cards, terminal devices and companies under suspicion.

The operational logic includes e.g. receiving purchase reports 162 from shops 150, sending parameters 164, such as exchange rates and alert lists, to points of sale 150, maintaining databases 104, 106, 108 and 110 as well as calculating costs. The calculation of costs includes e.g. charging companies for bonuses granted by points of sale 150 and, on the other hand, crediting bonuses used by customers to companies in accordance with predetermined calculation rules.

Reference number 150 refers to components of a point of sale, a point-of-sale terminal 152 used by a salesperson being the most important one. For electronic paying and signing, the point-of-sale terminal 152 may include a payment terminal 154 facing the customer and including a device called a PED (PIN Entry Device) for entering a PIN (Personal Identification Number) code,. In order to make it unnecessary to establish a line connection from each point-of-sale terminal 152 to the central system 100, one shop-specific or department-specific concentrator 156 serves all point-of-sale terminals 152 of a shop or a department. This includes that the concentrator 156 periodically, e.g. once a day, delivers a report 162 of the purchase transactions of the particular period to the central system 100. Likewise, the concentrator 156 periodically receives from the central system 100 information 164 which contains operation controlling parameters, alert lists and exchange rates. The alert lists contain information e.g. on customer loyalty cards that have been reported missing or are under suspicion.

At a general level, the overall system operates as follows. First, a basic function of the invention wherein all bonuses are stored onto a customer's customer loyalty card will be described. When a new customer 182 joins the system, he or she gives his or her identification information and, possibly, information on areas of interest, which can be used for allocated marketing purposes. Joining the system may take place in a shop or via an Internet connection to a central system 100. After accepting the customer, the central system 100 sends information 172 necessary for producing a customer loyalty card 180 to a card supplier 170. The card supplier 170 provides the customer 182 with the card. At the same time, the customer may be provided with information on using the card and properties thereof. The customer can use an Internet terminal to log on to the service and monitor accumulation and behaviour of bonuses and/or benefit vouchers stored on his or her card. Via the Internet connection the customer also gets information on the points of sale belonging to the system.

When the customer 182 pays for a purchase 184 in a point of sale 150, his or her card 180 is inserted into a card reader of a payment terminal 154. The customer may do this by him- or herself if the payment terminal is equipped with a PED device facing the customer. Otherwise, the customer gives his or her card to a salesperson, who inserts the card into the card reader. If a PED device has been installed and it is equipped with a display, the customer him- or herself may be shown the bonuses and/or benefit vouchers on the card which can be used for paying for a purchase. Alternatively, the salesperson may tell the customer this information. For instance, a purchase worth 500 Euros can be paid by using a benefit voucher worth 100 Euros and bonuses worth 50 Euros from the card, which leaves 350 Euros for the customer to pay. This can be charged from the customer's bank account by using a separate bank card or one that has been integrated onto the customer loyalty card 180. Alternatively, a separate credit card or one that has been integrated onto the customer loyalty card 180 or cash may be used for paying.

Reference number 185 refers to the customer's acknowledgement involved in the processing of bonuses and benefit vouchers, which may take place such that the customer enters his or her PIN code 187 into the PED device 154 or, if none exists, he or she may give the signature 188 to the salesperson, who accepts it by a point-of-sale terminal 152. Next, the benefit vouchers and bonus information provided on the customer loyalty card 180 are updated 186.

An interesting aspect involved in bonus information update 186 is that even if all the bonuses (and possible benefit vouchers) on the card 180 had been used for paying for a purchase, the bonuses would not, however, be exhausted since every purchase transaction accumulates the bonuses again. If the bonus percentage is e.g. 2, said purchase worth 500 Euros would yield a bonus of 10 Euros.

If a customer's card 182 goes missing, the customer reports this to the central system 100, which enters the card onto the alert list. The alert lists are delivered to the points of sale 150, as indicated by reference number 164. In order to minimize the amount of damage incurred to the customer, it is advantageous to set an upper limit of daily use of bonuses. Assuming that the alert lists of all points of sale 150 in the system can be updated during 24 hours, it is possible to misuse the bonuses only worth said upper limit, and this, too, only if the customer's PIN code 187 is found out or the signature 188 is forged.

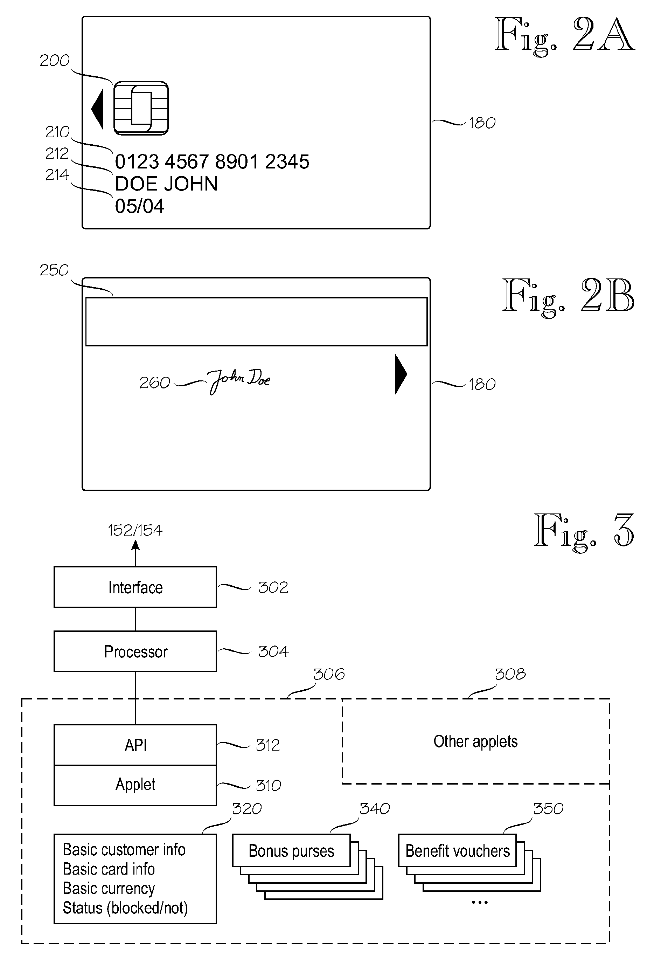

Figures 2A and 2B show a mechanical implementation of a customer loyalty card 180 on front and back sides, respectively. In this example, the customer loyalty card 180 is in accordance with an "EMV" standard (EMV being an acronym derived from the words Europay, Mastercard and Visa). As far as the present invention is concerned, the most crucial component of the card 180 is a chip 200, which contains a processor and a memory. The memory, in turn, contains an application program characteristic of a customer loyalty card as well as information structures associated therewith, as will be described in more detail below, particularly in connection with Figure 3. Except for the memory, i.e. the programs and information structures, of the chip, all other parts of the chip 180 may be completely conventional. A typical implementation of the card includes e.g. the number of the card 210, the name of the customer 212 as well as the month of expiration 214 of the card, preferably provided in embossed writing.

The back of the card may be provided with a magnetic stripe 250 to ensure backwards compatibility with less recent payment terminal devices. In other words, the same card, thanks to the chip 200, operates as an electronic bonus card in points of sale that have joined a bonus system, and, thanks to the embossed printing 210 to 214 and/or the magnetic stripe 250, as a conventional credit or bank card. As far as the present invention is concerned, however, the magnetic stripe 250 is irrelevant. Typically, the card is also provided with the customer's signature sample 260 and/or a customer-specific bioidenti-fier (not separately shown).

Figure 3 is a block diagram of a customer loyalty card chip 200. The chip includes a connection 302, via which a customer loyalty card connects to a point-of-sale terminal 152 or to a separate payment terminal 154 (Figure 1). The chip is provided with a processor 304 for executing application programs. A memory 306 contains an applet 310 which is characteristic of a customer loyalty card and which can be implemented by a technology called "applet". The applet 310 has an applications programming interface API 312.

Reference number 306 describes the part in the memory of the chip 200 used for the needs of the bonus/benefit voucher system of the present invention. In addition, a section 308 of an arbitrary size may be reserved from the memory of the chip for applets independent of the bonus/benefit voucher system, in which case the same physical card can be used for several different purposes. The card may serve e.g. as an electronic identity card.

In addition to the applet 310, the memory 306 of the card contains information structures relevant to the invention, such as basic customer card information 320, bonus purses 340 and a benefit voucher storage 350.

The basic customer/card information also includes the basic currency of the card, which is determined e.g. by the place of residence of the customer. The fact that the card contains information on the basic currency of the customer, and that the point-of-sale terminals have information on exchange rates of the countries belonging to the system enable bonuses to be obtained and used in a plurality of countries. The basic card information also includes a status field to indicate if the card has been blocked off from use. This will be described in closer detail in connection with security aspects.

The number of bonus purses 340 is more than one and it is preferably fixed and well-defined. In addition, each bonus purse is associated with a certain calendar year or another corresponding period of time. Each bonus purse corresponding with a certain calendar year presents the advantage of allowing a maximum life to be set for bonuses, with no need to the individual bonus transactions, each with a relevant age or time. For example, a limitation may be set to determine that bonuses accumulated from each purchase are to be used during the same or next calendar year, or otherwise they will expire. If, for example, a card is delivered in February 2005 and the card is to be valid for three years, it should be provided with bonus purses for years 2004 to 2008. This is because old bonuses from the previous year 2004 can be transferred onto a card delivered in 2005. The last bonus purse is for year 2008 since the three-year validity period expires in February 2008. But each year-specific bonus purse may only contain the net balance of bonuses, while the individual bonus transactions are maintained in the central system.

When the validity period indicated on the customer loyalty card has expired, the card is no longer valid, but the card bonuses accumulated thereon can be transferred onto a new card in any point of sale connected to the system. It may happen that the new and the old cards are simultaneously valid for some time, in which case the new card may already contain some bonuses when the bonuses from the old card are transferred thereto. Consequently, the bonuses transferred from the old card and the bonuses possibly accumulated on the new card should be added up in conjunction with a transfer of card bonuses. The bonus purses 340 are thus quite simple information structures: only one memory location per calendar year will suffice. After certain card bonuses have been stored in a purse and after some bonuses have been used therefrom, the purse only contains an ending balance per a particular calendar year, but bonus accumulations or uses of card bonuses relating to separate purchase transactions cannot be monitored on the basis of the information provided on the card. Instead, such information can be obtained from the central system via an Internet connection.

In addition to the bonus purses 340, benefit vouchers 350 may be stored onto the card. Benefit vouchers differ from bonuses in the following manner. The use of benefit vouchers may be limited to a certain company or its department or an outlet thereof. Benefit vouchers have no accurately determined number (indicated by three dots therebelow), nor are new benefit vouchers usually added to a card once delivered, but a card supplier 170 adds them to a card 180 in connection with the delivery or renewal thereof, in accordance with the instructions (marketing campaigns) given by the companies that have joined the system. In a simple system, no new benefit vouchers are usually added to a card once delivered, which is mainly due to the slowness of the existing devices. If a point of sale is to have the possibility to add new benefit vouchers onto a card, a special version of the point-of-sale terminal program can be provided for the purpose. Such an embodiment is described in connection with Figure 7.

The benefit vouchers 350 are more complex information structures than the bonus purses. According to a preferred embodiment of the invention, benefit vouchers include:
- an identifier of the company (and possibly a department thereof) that granted the benefit voucher;
- an identifier of a voucher;
- a validity period;
- the number thereof; and
- a brief description in plain text.

By means of the identifier of the company, the benefit vouchers can be made to be valid only in the points of sale of the particular company. The validity period indicates when the benefit voucher expires. Within the company (and possibly a department thereof), the identifier of the voucher indicates what kind of benefit the benefit voucher yields. The number means that a plurality of benefit vouchers with similar contents may exist, with no need to store each benefit voucher as a separate one into the memory 306 of the chip. For example, a certain company may grant five benefit vouchers, each one of which providing the possibility of becoming entitled to a discount of 10 Euros on a purchase of at least 50 Euros. The use of each such benefit reduces the number field of the particular benefit voucher by one, until the number drops to zero. The customer may monitor the benefit vouchers available for him or her by accessing the central system via an Internet connection.

The following list shows an exemplary set of functions of an application programming interface (API) 312 which can be used for implementing the functionality according to the invention.
- WriteCustomerData: writes onto the card basic information, i.e. the number of the card, name of the customer, identifier of the company that granted the card, message of the card supplier, validity period, currency code, encryption key generation, status (blocked or not), upper limit of daily bonus use, last date of bonus use and joint use of bonuses at the particular date, maximum number of benefit vouchers and the current number thereof.
- ReadCustomerData: reads the above basic information from the card.
- WritePurse: writes the contents of a bonus purse. Year and balance of the purse are given as parameters.
- ReadPurse: reads the contents of a bonus purse. Year given as a parameter.
- DebitPurse: debits the balance of the purse from a purse selected by the customer (this or the previous year), maintains joint use of bonuses at a particular date and monitors that the upper limit of daily bonus use is not exceeded.
- CreditPurse: adds the sum to the bonus purse.
- WriteBenefitRecord: writes a benefit voucher onto a card.
- InsertBenefitRecord: adds a benefit voucher onto a card.
- ReadCustomerBenefits: reads the benefit vouchers from the card. Used when asking the customer which benefit vouchers he or she wishes to use in connection with a purchase.
- UseBenefitRecord: Uses the selected benefit voucher (reduces the number of benefit vouchers of the particular type until the number drops to zero).
- BlockApplication: closes down the application, i.e. indicates the status field as blocked.
- PutKey: inserts into the application two encryption keys in accordance with a 3DES system: KscR_{mac} and KscR_{enc}. The application stores the keys and uses the first to calculate the latter and MAC in connection with encrypting messages. This function can be executed using a secure level 3 channel only, i.e. equipment of the card supplier.
- PutTlvData: stores personalization data of the TLV (Tag-Length-Value) format into the application. This function can be executed using a secure level 3 channel only.

It is particularly advantageous if the application programming interface 312 implements the function BlockApplication, which sets the status of the application as blocked. Furthermore, it is advantageous if this function has no reverse function, i.e. a card once blocked can no longer be released except by means of special equipment of the card supplier 170. The function BlockApplication does not, however, block the chip 200 on the card completely, but the other applications possibly residing in the section 308 of the memory continue their operation. The usefulness of the function BlockApplication is apparent e.g. when a point-of-sale terminal 150 detects that the number of the card is on the alert list provided in the memory of the point-of-sale terminal. In response to this, the point-of-sale terminal 150 calls the function BlockApplication of the application, whereafter the particular card can no longer be used for applications in accordance with the present invention. In connection with the next report 168, the point-of-sale terminal 150 may inform the central system 100 that the application of the particular card has been blocked permanently. The central system conveys this information to the point-of-sale terminals 150 in the next alert list update 164; consequently, the point-of-sale terminals 150 may remove the information of the particular card from their alert lists, which reduces the amount of space required by the alert lists in the memory of the point-of-sale terminals.

A need for such a BlockApplication function does not immediately seem to be probable since if it is suspected that a card is being misused, would it not be better to delete it completely? However, a separate BlockApplication function which only blocks the customer loyalty card application enables the maintainers of every application of the card (such as the loyal customer application, credit card, possible electronic identification card) to apply their own criteria as to when an application provided on the card should be blocked.

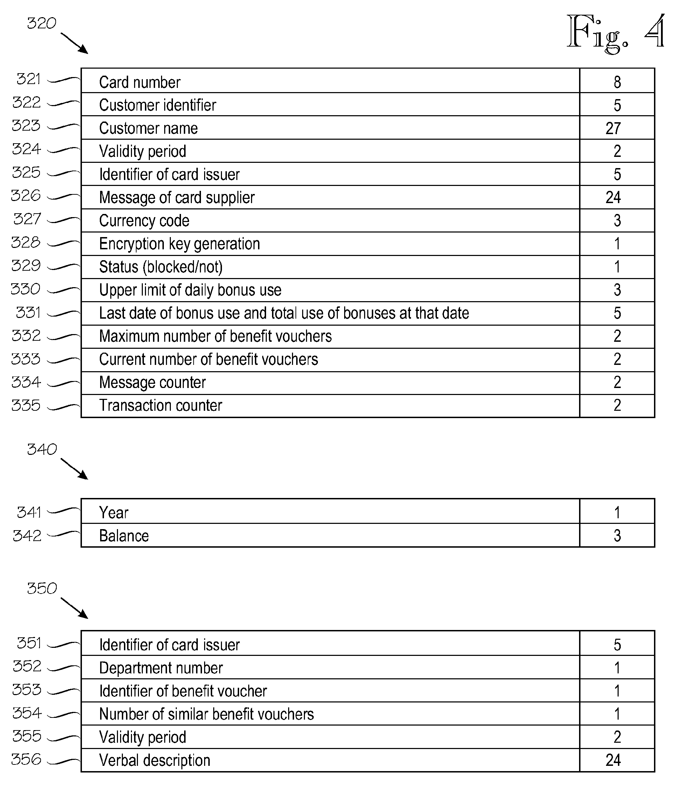

Figure 4 shows information structures provided on the chip in more detail than Figure 3. It is to be noted that the information structures shown in Figure 4 include several fields which in some respect are advantageous but are not necessary for the basic functionality of the invention.

Reference numbers 321 to 335 refer to a preferred combination for basic card information 320. Basic information means information which does not relate to any individual bonus purse or benefit voucher. To the right in each field there is shown the amount of memory space in octets required by the field, in accordance with a preferred embodiment of the invention. In this connection, the important point is not the memory space required by each single field but rather the fact that it is advantageous to reserve a fixed number of octets for each field, which makes the information structure necessary for defining a new card rather simple. Many aspects of the basic card information 321 to 335 are self-explanatory or will be explained below. It is to be mentioned herein that each card is preferably provided with a unique electronic number 321, which changes in connection with renewal of the card. The central system processes the customers on the basis of a unique customer identifier field 322.

A payment terminal may read the customer information without a protected connection to obtain information necessary for producing a card-specific key. Other functions can be called by means of a protected connection only.

Reference numbers 341 and 342 indicate fields of one bonus purse. A year 341 can be described by one octet if the conventions used are such that e.g. 2000 is subtracted from the year. In such a case, years 2000 to 2255 can be depicted by one octet. Preferably, a balance 342 is stored as an integer so that e.g. in countries using Euro the unit is Euro cent. The number of bonus purses provided on the card, indicated by reference number 340, is 2 + n, wherein n is the validity period of the card in years (or in other periods of time).

Reference numbers 351 to 355 indicate a preferred field combination per each different benefit voucher 350. An identifier 351 of a company enables the benefit vouchers to be valid only in the points of sale of the particular company. A department field 352 enables a more specific division within a company. A preferred implementation is one wherein a certain part of the number space of a department (e.g. department ≥ 1) only refers to a certain department while another part (e.g. department = 0) means that a benefit voucher is valid in all departments of the particular company. The same practice may also be applied in connection with a company number: for instance, if the company number = 0, the benefit voucher is valid in all companies that have joined the system.

A benefit voucher identifier 353 is an internal code of a company (and possibly even of a department) to indicate to what kind of benefit the benefit voucher entitles. The benefits may be e.g. of the following types:
- n products for the price of m (e.g. three for the price of two);
- credit of x Euro(s) (discount or bonus) when a purchase is worth at least y Euro(s);
- company-/department-specific bonus of x Euro(s).

The number 354 means that a plurality of benefit vouchers of similar contents may be provided, with no need to store each benefit voucher as a separate one into the memory 306 of the chip. The validity period 355 indicates when a benefit voucher expires. A free-format verbal description 356 may be shown on the display of the point-of-sale terminal when browsing the benefit vouchers. For example, a certain company may grant five benefit vouchers, each one of which providing the possibility of becoming entitled to a discount of 10 Euros on a purchase of at least 50 Euros. The use of each such benefit reduces the number field of the particular benefit voucher by one, until the number drops to zero. The customer may monitor the benefit vouchers available for him or her by accessing the central system via an Internet connection.

The logic implementing the benefits granted by the benefit vouchers is programmed into the memory of the payment terminal 154.

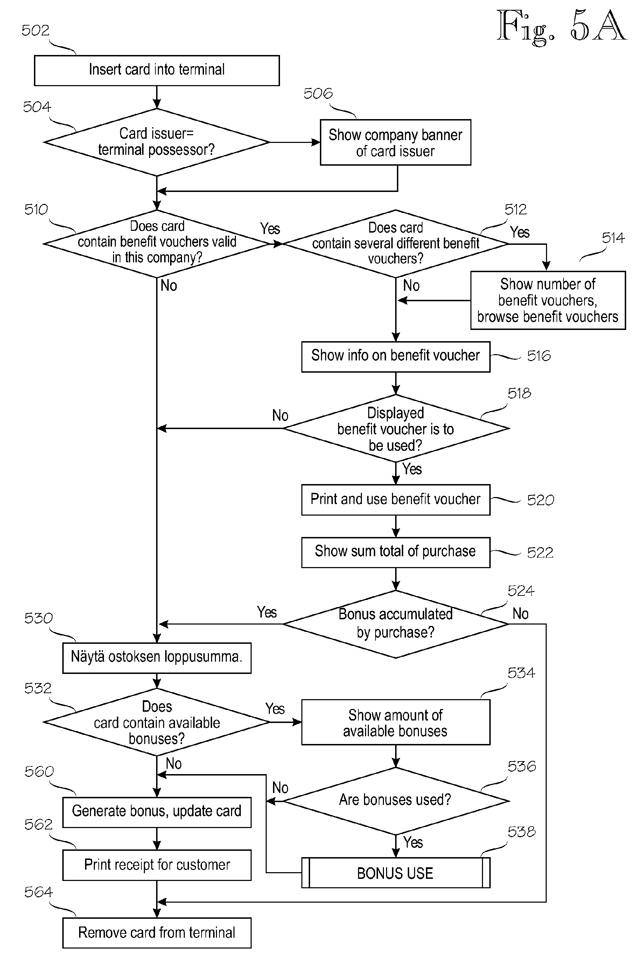

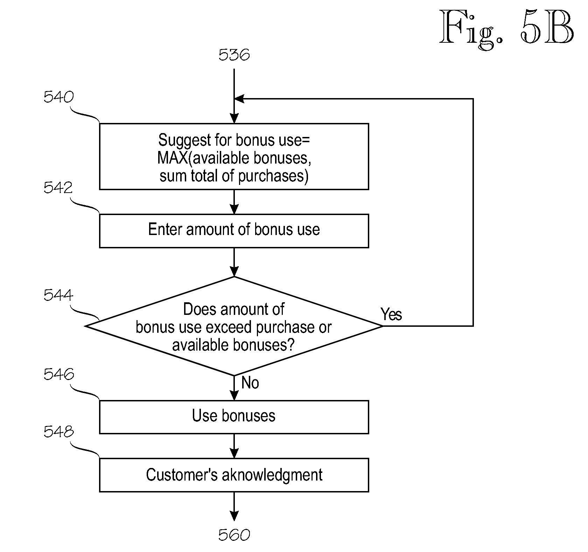

Figures 5A and 5B, which combine to constitute one logical figure, show a flow diagram of a selling transaction in accordance with a preferred embodiment of the invention. The process starts in step 502, wherein a customer loyalty card is inserted into a terminal device, such as a payment terminal/PED device 154. In steps 504 to 506, a company text (verbal description) provided by the company that granted the card is shown if the company that granted the card is the same company as the company in possession of a point-of-sale terminal.

In step 510, it is examined whether the card is provided with benefit vouchers valid in this company. If yes, in step 512 it is examined whether the card is provided with a plurality of different benefit vouchers. If yes, different benefit vouchers are browsed and the number thereof is shown in step 514. In step 516, a certain benefit voucher (either the only one provided on the card valid in this company or one selected by browsing) has been selected and its information is shown. In step 518, the customer is asked whether he or she wishes to use the selected benefit voucher, e.g. press buttons "accept" and "cancel" are provided. If the customer uses the benefit voucher, in step 520 it is printed and utilized and the sum of the purchase after the benefit voucher has been used is shown in step 522. Correspondingly, the benefit voucher on the card is invalidated, i.e. indicated as used, or removed.

In step 524 it is examined whether the purchase accumulates bonuses. If not, the process moves to step 564, where the process ends. If the purchase accumulates bonuses, the process moves to step 530, where the sum total of the purchase is further being shown. In step 532, it is examined whether the card is provided with available bonuses. This means that a payment terminal, via an interface 312 of the card, sends an applet 310 an inquiry about the bonuses and receives a reply therefrom. The inquiry is performed for each bonus purse not yet expired and the balances of bonuses in non-expired bonus purses are summed. In addition, the applet 310 returns the contents of the upper limit of daily bonus use (field 330) and bonus use at a particular date (field 331). On the basis of this information, the payment terminal calculates a value which is the maximum of the total bonus of the card and the difference that remains between the upper limit of daily bonus use (field 330) and the bonus use at the particular date (field 331). If this value exceeds zero (or some other small limit value), the available bonuses are shown in step 534. In step 536, the customer is provided with the possibility to use the bonuses. If he or she chooses to use the bonuses for paying for purchases, the process moves to using the bonuses, step 538, which is shown in more detail as five sub-steps in Figure 5B. In step 560, on the basis of the sum total of the purchase, a bonus is generated and it is updated in the present year's bonus purse of the card. In step 562, a sales receipt is printed for the customer. In step 564, the card is removed from the terminal and the process ends.

Figure 5B shows bonus use in more detail; step 538 of Figure 5A. In step 540, a maximum amount of bonus use that can be used at the particular date is suggested to the customer. In step 542, the customer accepts this or enters a sum smaller than this. In step 544, it is examined whether the amount of bonus use given by the customer is impossible, i.e. whether it exceeds the sum total of the purchase or the amount of bonuses available at the particular date. If yes, the process returns to step 540. Otherwise, the amount of bonuses given by the customer is used in step 546 and the customer is asked to provide his or her acknowledgement in step 548. This takes place such that the customer enters his or her PIN code into a PED device or provides his or her signature on a physical sales receipt. Via the interface 312, the payment terminal informs the applet 310 of the card about the bonus used. It is advantageous that the applet 310 further checks that the contents of the relevant bonus purse and the maximum limit of daily bonus use are not exceeded.

It can be seen in the flow diagram of Figures 5A and 5B e.g. that if the card is provided both with benefit vouchers and bonuses valid in the particular shop, the customer is first offered the possibility to use the benefit vouchers.

### Information security

The bonus of the invention and possible benefit vouchers are almost comparable with money. The invention differs from electric money to be downloaded onto a smart card e.g. in that bonuses on a customer loyalty card are accumulated not only in online banking terminals but also in common shops, whose number may be considerably large. The use of a customer loyalty card may involve e.g. the following risks: the card goes missing or is stolen, a point-of-sale/payment terminal is stolen from an entrepreneur or the entrepreneur is dishonest. It is also possible that attempts are made to forge cards and/or point-of-sale terminals. If all risks were to be eliminated completely, consequent maximum information security would probably result in a system that would be too cumbrous and too expensive to use. A difficulty in providing information security is that the point-of-sale terminals 152 or the concentrators 156 (Figure 1) cannot be expected to have a permanent line connection to the central system 100. According to a preferred embodiment of the invention, a compromise is made wherein the goal is not absolute misuse prevention but an attempt is made to keep damages moderate.

The customer should handle the card carefully. If the card goes missing or it is stolen, the customer informs the central system 100 of this, whereafter he or she is responsible for the use of the bonuses and benefit vouchers on the card for a certain period of time, e.g. for some days or for a week, the period of time being chosen so as to provide enough time for updating the alert lists of all point-of-sale terminals 152 of the system. It should be remembered that the point-of-sale terminals are allowed a certain operation time, a couple of days in practice, without a line connection to the central system.

If a card that has been stolen or gone missing contains a large amount of bonuses, there is too little time to exhaust them completely because of the upper limit of daily bonus use (the field 330 in Figure 4), and the cumulative use of bonuses at the particular date is monitored by means of field 331. Most point-of-sale terminals have a line connection to the central system once a day, so after this, in order to utilize the remaining bonuses, a deceitful person is compelled to find points of sale that have a line connection to the central system less often than once a day. After at least a couple of days each point-of-sale terminal has to have a line connection to the central system, which is when it receives alert list updates (reference 164 in Figure 1) or a timer of the point-of-sale terminal inactivates it.

Each customer loyalty card (chip) has a unique key known to the terminal devices in the system. The chip does not hand over bonus information, and the bonus information can only be changed using a protected connection, which is established through a key handshake, as is known to persons skilled in cryptography.

The central system maintains a list of stolen or missing cards. This alert list is delivered on a regular basis to all terminal devices. If a stolen card is entered into a reader, it will be invalidated permanently (by setting the field 329 shown in Figure 4); preferably, the application programming interface 312 of the chip is only provided with a function for blocking the application, but not for releasing the blocking). The operator of the central system guarantees that the card can be found on the alert list of all point-of-sale terminals within a determined period of time (e.g. one week) from the moment at which the card was reported missing. Next, the central system 100 asks the card supplier 170 to supply a new card to replace the stolen one. Balances, which have been checked after a predetermined period of time (e.g. a week) since the theft was reported, are downloaded onto the new card. The new card may also be delivered earlier if an attempt has been made to use the stolen card and it has been invalidated permanently and the remaining balances on the card have been read in this connection.

A second risk factor is presented by stolen point-of-sale terminals. When being stolen, a point-of-sale terminal has to be switched off, whereafter the bonus application in accordance with the invention cannot be switched on without a key card in possession of the entrepreneur. If the entrepreneur's key card has also been stolen, the device can only be used during a certain maximum period of time since the last line connection. After this, a timer installed in the device inactivates it. The maximum period of time is preferably two days plus approximately eight hours. The maximum period of time is determined to be such because handshaking procedures usually take place at night, while the eight-hour period relates to the vagueness when no period of time for handshaking has been defined accurately. In practice, the device will be blocked if two successive handshaking periods pass with no connection to the central system.

Furthermore, an upper limit of bonuses a point-of-sale terminal is allowed to grant before it must again have a line connection to the central system has been programmed into the point-of-sale terminal. The entrepreneur should report the theft to the central system, and his or her responsibility is limited to a certain predetermined period of time (e.g. one week) since the incident was reported.

The central system maintains a list of stolen point-of-sale terminals. Since a point-of-sale terminal operates only for a certain period of time without a line connection, a user of a stolen point-of-sale terminal has to bring the point-of-sale terminal into a line connection with the central system, but the central system then detects that the identifier of the device is on the alert list, in which case the central system sends the point-of-sale terminal a block command, which is analogous with the blocking function of the application programming interface 312 of the card. A difference therebetween is, however, that a blocked card can no longer be brought into operation, but a stolen and blocked point-of-sale terminal can be made to operate using special equipment of the supplier (e.g. by erasing its memory completely and by re-installing the software). The central system monitors e.g. that the transaction series produced by the payment terminals are intact.

A third risk factor is entrepreneurial dishonesty. An entrepreneur may be on the verge of a bankruptcy and before this may try to generate bonuses for him- or herself or his or her friends and/or relatives. The central system can close the device through the alert list. However, it takes a couple of months to detect the insolvency of an entrepreneur. A point-of-sale terminal may generate a maximum amount of bonuses before it again has to have a line connection to the central system. Recurrent deceitful bonus generating procedures can be detected by examining the transaction material, and cards carrying deceitfully generated bonuses and the device used for such generation can be invalidated.

Each point-of-sale terminal is provided with a predetermined limit of daily bonus-granting right. This limit is determined together with the operator of the central system and the entrepreneur. The limit is proportioned with respect to sales activity at the particular point-of-sale terminal, estimated by the entrepreneur. If the limit is exceeded, no bonuses may be granted by the point-of-sale terminal without a new line connection.

Forgery of customer loyalty cards and terminal devices can be prevented by means of cryptography. The EMV smart card standard is based on strong encryption keys, as is known to those skilled in the art.

### Database bonuses

In some preferred embodiments of the invention, in addition to card bonuses on a customer loyalty card, bonuses are maintained in a separate database or in a plurality of separate databases. Such bonuses are called database bonuses. A bonus database is a database different in kind from the customer database contained in the customer database 104 shown in Figure 1, which, for each customer, contains a backup copy of the customer's customer loyalty card. (A backup copy is not, however, real-time since the point-of-sale terminal systems usually report bonus transactions once per workday, and during equipment or line malfunction the delay may be even longer).

Figure 6 shows the overall system in accordance with Figure 1 with means for processing database bonuses added thereto. Elements designated by reference numbers 100 to 188 have been explained in connection with Figure 1 and they will not be explained again herein. In addition to these elements, the system shown in Figure 6 includes a second database 600 for maintaining database bonuses. The second database, i.e. the bonus database 600, enables the embodiment according to Figure 6 to integrate into a system supporting a customer loyalty card also companies that do not use a point-of-sale terminal system 150 into which a customer loyalty card 180 is entered for bonus updates. In Figure 6, such companies are represented by an invoicing company 650 and an online shop 660. The invoicing company 650 sells goods or services on invoice, paid by the customer by employing a conventional method, e.g. using an online banking terminal or through electronic banking. The customer has business with the online shop 660 through the Internet or another information network (e.g. a mobile telephone network) and pays for his or her purchases typically by means of electronic banking or a credit card. What the invoicing company and the online shop 660 have in common is that when the customer is paying for goods or services, the customer loyalty card 180 cannot be brought into physical contact with the point-of-sale terminal system 150. Therefore, the invoicing company 650 and the online shop 660 provide the bonus database 600 with bonus information, as shown by reference numbers 652 and 662, respectively.

The invoicing companies 650 do not necessarily integrate into the central system 100 as fixedly as companies that use point-of-sale terminal systems 150, and it is possible that information is transferred manually or through customized adaptation programs, which may not be tested as carefully as the point-of-sale terminal systems 150, which typically include standard software. Relatively small numbers of transactions (compared to those in connection with cash purchases) and/or customized adaptation programs may lead to a problematic situation wherein a bonus, possibly even a large one, is generated on false grounds. If the customer had already used the bonus granted on false grounds, it would be technically difficult to demand the customer to return such a bonus. Therefore, it is advantageous to implement a certain delay, i.e. a waiting period, for instance by dividing the bonus database 600 in two parts, a part 602 comprising anticipatory bonuses and a part 604 comprising available bonuses. On the basis of a particular precautionary criterion, e.g. expiry of the waiting period, bonuses are transferred from the anticipatory bonuses part 602 to the available bonuses part 604.

On account of the waiting period or another precautionary criterion, a further advantage is also achieved wherein the system supports companies whose business deals may change after concluding a deal. For instance, an insurance may be taken and paid for for a year, but the amount of insurance may decrease (e.g. as a result of selling property), so that some of the insurance payment is returned to the customer. If the bonuses generated from the original insurance payment had already been transferred onto the customer loyalty card 180, it would be technically difficult to demand the bonuses back from the customer. A solution to this problem would naturally be to subtract the granted bonuses from the insurance payment to be returned, but the use of a waiting period eliminates the problem completely.

Figure 7 shows information structures for processing database bonuses in greater detail. The main elements of Figure 7 are a customer loyalty card 180, a customer 182, a point-of-sale terminal system 150, an invoicing company 650, an online shop 660 and an operational logic 102 of a central system. It can be seen that a bonus database 600 includes parts 602 and 604 such that the part 602 comprises anticipatory bonuses while the part 604 comprises available bonuses.

Figure 7 shows several ways of using the bonus database 600 to 604, either separately or together with the card 180. When the invoicing company 650 sends an invoice to a customer, or when a customer pays an invoice, the invoicing company 650 provides the first part 602 of the bonus database 600 with a bonus record 704. Reference number 702 depicts information flow producing the bonus record 704. The bonus record 704 includes the following fields: identifier of transaction, identifier of seller, identifier of customer, bonus, and first date of bonus use. In addition to the described fields, the record 704 may contain profile information on a customer's purchasing behaviour which, however, is irrelevant to the present invention. An identifier of transaction may be globally unique, e.g. such that a certain part of a transaction identifier space is allocated to each invoicing company. Alternatively, the identifier of transaction may be unique only within each company, in which case the identifiers of both the seller and the transaction are necessary for identifying a transaction.

If it is found out afterwards that a bonus has been granted on false grounds, e.g. due to a keying error or system malfunction or because the value of a business deal changes after sending or paying an invoice, the invoicing company 650 may cancel or change the granted bonus if the bonus has not been used yet. Reference number 706 depicts such cancelling or changing of a previously granted bonus.

The operational logic 102 of the central system debits the account of the invoicing company 650 for granted bonuses, as described in connection with Figure 1. Similarly, the operational logic 102 credits the account of the invoicing company 650 for cancelled bonuses.

Reference number 722 describes a process which is executed periodically and which transfers bonuses from the anticipatory bonuses part 602 to the available bonuses part 604 if their date of use has already been reached, i.e. their waiting period has expired. The structure of the available bonuses part 604 may be similar to that of the set of bonus purses on the customer loyalty card 180 (cf. Figures 3 and 4, the element 340). In the anticipatory bonuses part 602, then, each bonus transaction has been stored as a separate record, but the available bonuses part 604 contains a summed bonus balance per year.

From the available bonuses part 604 of the bonus database 600 the bonuses may be transferred to the card supplier 170, which transfers the bonuses onto the customer's card 180 when it is renewed for the next time (e.g. once a year). Arrow 732 depicts this information flow. However, only the available bonuses part 604 of the bonus database passes through the card supplier 170, in the form of a renewable card. In addition to this, the bonuses on the customer's old card can be transferred onto the new card by means of the functionality of the point-of-sale terminal system 150, as was explained in connection with Figure 3.

Buying from the online shop 660 generates a bonus 714 in a manner similar to that in connection with the invoicing company 650. Arrow 712 depicts this information flow. According to a preferred embodiment of the invention, the bonus balance in the available bonuses part 604 can be used for paying for purchases in connection with the electronic commerce 660, as shown by arrow 716.

When the bonus balance is used in connection with electronic commerce 660 for paying for purchases, it becomes apparent why it is advantageous to divide the bonus database 600 into an anticipatory part 602 and an available part 604. If the bonus database 600 only had an anticipatory part 602, each use 716 of the bonuses would induce a database query wherein the particular customer's bonuses with the first date of use being today or before would be retrieved. The bonuses would then have to be invalidated after use. This would cause a considerable load in the database. This load can be reduced considerably by maintaining a customer-specific available bonuses purse 604, which only includes a total balance per year.

According to still another preferred embodiment, the customer may transfer bonuses on the customer loyalty card 180 to the available bonuses part 604 of the bonus database 600. This process is depicted by arrow 742. Arrow 742 is a two-way arrow, which means that bonuses may be transferred from the card 180 to the bonus database 600 or vice versa. Since this requires a smart card writing/reading device, the operation may be implemented e.g. by entering the customer loyalty card 180 into a point-of-sale terminal system 150 belonging to the system. The use of the user interface (the display and the keyboard) of the point-of-sale terminal system 150 for such a purpose may result in queues. This can be prevented e.g. by providing a customer 182 using an Internet terminal device with a user interface to the central system through a network connection. This user interface enables the customer to program into the operational logic 102 of the central system a command to transfer a certain amount of bonuses from the customer loyalty card 180 to the available bonuses part 604 of the bonus database 600. This pre-programmed transfer then takes place automatically when the customer's customer loyalty card 180 is entered into a point-of-sale terminal system 150. The command may be checked via an online connection from the central system. (Alternatively, the transfer may take place in any separate terminal device equipped with a card reading/writing device and connected to the central system so that using the separate terminal device does not stop the queue in a shop.) If, at the time of the transfer, the amount of bonuses on the customer loyalty card 180 is smaller than the amount of bonuses the customer wishes to be transferred, naturally only the bonuses on the card are then transferred to the database 604. A transfer 732 reverse to the process 742, i.e. from a database bonus into card bonus, may take place in a similar manner.

According to yet another embodiment, the customer may use any smart card reading/writing device, e.g. one owned by him- or herself or provided by the employer, which is connected to the operational logic 102 of the central system through the Internet. However, this embodiment requires that the customer loyalty card 180 should be provided with a security module, i.e. software to set up a protected connection, e.g. an https connection, to the operational logic 102 of the central system. Such a security module on a smart card is commercially available e.g. from Datacard (www.datacard.com). A protected connection and cryptographic certificates or the like enable the customer loyalty card software to be sure that the commands influencing the bonus balance are authentic, i.e. they originate from the operational logic 102 of the central system.

### Adding benefit vouchers onto a card in use

The technology described above, particularly in connection with Figure 7, for transferring database bonuses and card bonus between each other may also be enhanced so as to enable new benefit vouchers to be added onto a card in use. On the basis of the customer database 104 (Figure 1), it is known which benefit vouchers are provided on the customer's card, whether the card has any space for new benefit vouchers, which benefit vouchers have been used from the card, and which benefit vouchers have expired. New benefit vouchers may be added onto the card if the card has space for new benefit vouchers. A decision concerning which benefit vouchers will be added may be generated on the basis of the customer's place of residence or profile. Alternatively, the customer may influence the selection through an Internet connection. He or she may, for instance, select which benefit vouchers he or she would like to be added onto the card. Information on a benefit voucher to be added is delivered to a database 744 (which may be the same one through which requests for transferring bonuses between a card and a database of the central system are delivered). When the card is inserted into a card reading/writing device equipped with an online connection, the device checks whether the database contains any transaction requests directed at the particular card. If yes, the device implements the transaction requests e.g. by adding onto the card one or more benefit vouchers and by noting this addition in a sales receipt printed for the customer. Arrow 746 depicts addition of a benefit voucher. The checking may take place on the background at the same time as the operator enters into the user interface instructions on how to use benefit vouchers, bonus accumulation and paying with bonuses. Consequently, the transaction at the point-of-sale terminal is not substantially delayed.

Particularly the function InsertBenefitRecord of the card's application programming interface API 312 (Figure 3) is utilized for adding a benefit voucher onto the card. This function knows how to add a benefit voucher onto a card if empty locations exist thereon. This functionality may further be extended such that a benefit voucher may also be added to replace an expired or a completely exhausted benefit voucher. This can also be carried out at the terminal device by utilizing the Read- and WriteBenefitRecord commands.

Finally, a successful card update is turned into a transaction which is delivered to the central system. Thus, the central system is again aware of the card's exact situation and may utilize this information in future, and the customer may examine his or her own benefit vouchers through a network connection.

It is apparent to one skilled in the art that as technology advances, the basic idea of the invention may be implemented in many different ways. The invention and its embodiments are thus not restricted to the above-described examples but they may vary within the scope of the claims.

## Claims

1. A smart card (180) for use as a customer loyalty card, including a microchip (200) provided with a processor (304) and a memory (306) as well as a data transfer connection (302) for two-way data transfer with a point-of-sale terminal device (150);
wherein the memory (306) contains:
a set of card-specific basic information (320);
multiple bonus purses (340) wherein each bonus purse is associated with a specific period of time (341);
an applet (310) provided with a set of functions as well as a programming interface (312) for calling said functions;
wherein the functions include reading and writing said multiple bonus purses (340) in response to an input received via the data transfer connection (302).

2. A smart card as claimed in claim 1, wherein each of the periods of time is a calendar year.

3. A smart card as claimed in claim 2, wherein the smart card has a validity period in years, starting from its granting date, and that the number of year-specific bonus purses is at least the validity period in years plus two.

4. A smart card as claimed in any one of the preceding claims, wherein:
the card-specific basic information includes a status field (329) provided with a blocked state;
the functions include setting the status field as blocked; and
the functions for reading and writing said at least one bonus purse (340) are responsive to the status field (329) not being in the blocked state.

5. A smart card as claimed in any one of the preceding claims, wherein:
the card-specific basic information includes an upper limit (330) of daily bonus use and joint use of bonuses at the particular date (331); and
the functions include updating the last date of bonus use and the joint use of bonuses at the particular date.

6. A smart card as claimed in any one of the preceding claims, wherein:
the memory contains a set of benefit vouchers (350), each of which being associated with a company identifier (351, 352) and type of benefit (353); and
the functions include reading and printing benefit vouchers through the data transfer connection (302) as well as invalidating benefit vouchers in response to an input received via the data transfer connection (302).

7. A point-of-sale terminal system (150) including a payment terminal device (154), wherein the payment terminal device includes or is connected with:
first data transfer means for reading and writing a smart card according to claim 1;
second data transfer means for a line connection to a central system (100);
an application program, wherein the application program is operable to:
use bonuses stored on the smart card beginning from the oldest bonus purse that contains bonuses; and to
grant bonuses into the bonus purse corresponding to the current period of time.

8. A point-of-sale terminal system (150) as claimed in claim 7, wherein the application program includes a function for blocking the point-of-sale terminal system in response to a period of time elapsed since the previous line connection to a central system (100) exceeding a predetermined limit value.

9. A point-of-sale terminal system (150) as claimed in claim 7 or 8, wherein the application program includes a function for monitoring a total amount of bonuses granted after the previous line connection and for interrupting granting of bonuses if the predetermined limit value is exceeded.

10. A central system (100) for controlling a plurality of payment terminals (154) through a telecommunication connection when the payment terminals are provided with means for reading and writing a customer loyalty card (180) implemented as a smart card;
wherein that the central system includes:
a customer database (104) which contains information on a plurality of customer loyalty cards (180), each of which is provided with customer information and multiple bonus purses (340) wherein each bonus purse is associated with a specific period of time (341);
a company database (106) which contains information on payment terminals (154) and companies in possession thereof;
an alert list database (110), which contains information on suspicious customer loyalty cards and/or payment terminals;
an operational logic (102) which includes:
a routine for receiving purchase reports (162) to be received periodically from each company in possession of a payment terminal (154) such that a combination of purchase reports (162) of each possessor company contains information on bonuses granted by the payment terminals of a particular possessor company during a period; and
a routine for distributing contents of an alert list database (110) to the companies in possession of payment terminals (154).

11. A central system as claimed in claim 10, wherein the customer database (104) contains information on a plurality of customer loyalty cards, each of which further containing information on benefit vouchers on a customer loyalty card.

12. A central system as claimed in claim 10 or 11, wherein the operational logic includes a routine for receiving information on successfully blocked customer loyalty cards and for distributing such information to the companies in possession of payment terminals (154).

13. A central system as claimed in any one of claims 10, 11 or 12, further comprising a bonus database (600) whose first part (602) contains the following information elements for each of a plurality of bonus transactions: identifier of a bonus transaction, identifier of a seller, identifier of a customer, amount of bonus and point of time of use thereof.

14. A central system as claimed in claim 13, further comprising means (706) for changing a bonus entered in the first part (602) of the bonus database.

15. A central system as claimed in claim 13 or 14, further comprising:
a second part (604) of the bonus database, which contains a total amount of bonuses customer-specifically; and
means (722) for transferring bonuses from the first part (602) to the second part (604) in response to said point of time of use having been reached.

16. A central system as claimed in any one of claims 13 to 15, further comprising means (716) for using a bonus provided in the bonus database (600 to 604) as a means of payment in connection with electronic commerce (660).

17. A central system as claimed in any one of claims 13 to 16, further comprising a function (742) for transferring bonuses from a customer loyalty card (180) to the bonus database (600, 604).
